Europäisches Patentamt

European Patent Office

Office européen des brevets

(11) Publication number: **0 106 998**
**B1**

# EUROPEAN PATENT SPECIFICATION

(45) Date of publication of patent specification: **04.03.87**

(51) Int. Cl.⁴: **C 23 C 22/66, F 24 J 2/48**

(21) Application number: **83108865.3**

(22) Date of filing: **08.09.83**

(54) **Process for producing a black selective coating on surfaces of bodies of aluminium and its alloys and products so obtained.**

(30) Priority: **28.09.82 IT 2346282**

(43) Date of publication of application:
**02.05.84 Bulletin 84/18**

(45) Publication of the grant of the patent:
**04.03.87 Bulletin 87/10**

(84) Designated Contracting States:
**AT BE CH DE FR GB LI LU NL SE**

(56) References cited:
**FR-A-2 354 394**
**FR-A-2 370 107**
**US-A-2 268 331**
**US-A-3 971 674**

(73) Proprietor: **ALUMINIA S.p.A.**
**Piazza Marconi, 25**
**I-00144 Roma-Eur (IT)**

(72) Inventor: **Fiorini, Paolo**
**c/o ISML Via Fauser, 4**
**I-28100 Novara (IT)**
Inventor: **Abis, Sergio**
**c/o ISML Via Fauser, 4**
**I-28100 Novara (IT)**
Inventor: **Giordano, Giuseppe**
**c/o ISML Via Fauser, 4**
**I-28100 Novara (IT)**
Inventor: **Lorenzetti, Maria Luisa**
**c/o ISML Via Fauser, 4**
**I-28100 Novara (IT)**

(74) Representative: **Ferri, Antonio**
**c/o BREVETTI EUROPA S.r.l. Piazza Bernini 6**
**I-20133 Milano (IT)**

Courier Press, Leamington Spa, England.

## Description

### Background of the invention

This invention relates to a process for producing black selective coatings on the surface of bodies of aluminium and its alloys, to be utilized particularly as panel components for solar collectors.

As is known, in all world countries researches are being carried on to develop energy sources alternative to oil, among which the solar radiant energy is to be mentioned, which—mainly because it is "renewable" and "clean"—is already finding important fields of utilizations, particularly in the low-temperature energy generation by the use of "solar collectors", which are chiefly employed in the heating of ambients and sanitary waters.

Said solar collectors generally include, among their components, the so-called "absorbing plates"—generally made of metals—which have the task of absorbing the solar radiations with the relevant energy content, that is transmitted——through the metal—to a heat carrying fluid, wherefrom it is yielded to proper storage system, which can substantially consist, for example, of a water tank (optionally equipped with an auxiliary heating device), the water being subsequently conveyed to the desired utilization points (heating plants, sanitary water and the like).

In order to obtain a satisfactory energetic-economic balance, the "absorbing surface" of the panels must be "selective", i.e. it must be characterized by the feature of possessing, jointly, both a high value of the absorptance coefficient $a$ of the incident solar energy ("visible" and "near infrared") and a low value of the coefficient of reflection in the far infrared IR (attributable, as is known, to a low value of the emissivity coefficient $\varepsilon$ in the above-mentioned IR region of the spectrum).

It is known too that, generally, the "black surfaces" (for example a metal sheet coated with a black paint coat) absorb high amounts of incident solar energy, but, conversely, they re-emit a considerable amount of said energy as IR radiations, wherefore they are not "selective" in the abovesaid sense.

Thus, in order to obtain black selective surfaces on a metal substrate, there are employed at present particular processes, which are based on specific chemical or electrochemical surface treatments of metal sheets, such as copper or aluminium, intended to form the absorbing surfaces of the solar panels.

The French patent application 2 354 394 teaches obtaining selective black coatings by immersing aluminium (or aluminium alloys) in a hot alkaline aqueous solution containing silicates and, optionally, a kind of ions selected from the group consisting of Zn, Ca, Mg, Sr, and Be, said ions being supplied, for example, in the form of sulphates.

In the US patent 3 971 674, in turn, the selective black coating is applied by immersing the aluminium in an alkaline bath containing a soluble borate salt and a soluble silicate salt.

### Summary of the invention

It is an object of the present invention to provide a simplified, easily appliable and controllable and highly effective process to obtain black selective coatings on an aluminium body, said aluminium body consisting of aluminium or an alloy thereof containing at least 85%, preferably at least 95% by weight of Al, where it is understood that "black selective coating" means a coating—substantially exhibiting a black colour—endowed a high absorption coefficient ("absorptance" higher than 80%) of the radiations having wavelength in the "visible" and "near infrared" regions of the solar spectrum (i.e. from 0.38 to 1.9 µm) and with a low emissivity coefficient ("emissivity" below 50%) of the radiations in the "far infrared" (higher than 6 µm), said process being one which provides immersion of the previously degreased and/or pickled bodies in a hot alkaline solution comprising silicates.

This and still other objects, which will be better apparent to those skilled in the art from the following description, are achieved, according to the present invention, by a process which substantially consists in subjecting the aluminium surface to a treatment, lasting at least 10 minutes, with a bath consisting essentially of water containing silicates, carbonates and bicarbonates of alkaline and alkaline-earth metals, said bath being kept at a temperature ranging from 85°C to 120°C and adjusted at a pH-value ranging from 7 to 10, said carbonates and bicarbonates being at a total concentration from 10 to 250 mg/l with a $[HCO_3^-]/[CO_3^=]$ ratio preferably comprised between 200 and 13, and said silicates being preferably in the form of sodium metasilicate $Na_2SiO_3 \cdot 9H_2O$ at a concentration from 10 to 200 mg/l, preferably from 150 to 200 mg/l.

### Detailed description of the invention

More particularly, the abovesaid process consists—according to the present invention and to a preferred but not exclusive embodiment thereof—in the following steps and relevant operative conditions:

a) surface pre-treatment: the semifinished aluminium (or alloys thereof) product is degreased by means of known techniques as are usually employed for the aluminium semifinished products to be subjected to anodic oxidizing treatments, such as e.g. degreasing with organic solvents, optionally associated with an alkaline pickling followed by washings with water and neutralization with nitric acid solution;

b) production of the black selective coating: the semifinished product coming from the pre-treatment as per point a) hereinbefore is immersed into a bath, maintained at the boiling temperature for 80—100 minutes, said bath consisting substantially of water containing, either immersed or half-immersed, a plurality of stiff and generally spheroidal bodies, measuring 5 to 10 mm, consisting of foamed-porous clay, wherefrom the water ·under the abovesaid operative conditions—extracts, while solubilizing them, silicates, carbonates and bicarbonates of alkaline and alkaline-earth metals in such amounts and proportions and with such kinetics as to impart to said bath a buffered pH from 7 to 10, a total content of carbonates+bicarbonates ranging from 10 to 250 mg/l with a $[HCO_3^-]/[CO_3^=]$ ratio preferably ranging from 200 to 13, and a silicate content between 10 and 200 mg/l.

Higher concentrations, if any, of the carbonates-bicarbonates and of the silicates do not bring about sensible advantages.

The above-mentioned bodies of foamed clay are easily and economically available in commerce, as they are broadly employed to form thermally insulating coatings, particularly in building. As is known, foamed clay for insulating uses is generally obtained through processes substantially consisting in producing, following conventional methods, clay and water conglomerates which are then baked at temperatures of the order of 1200°C.

For an optimal choice thereof it is sufficient a simple check-test by preparing an aqueous extract ($H_2O$/foamed clay weight ratio=2/1; temperature: boiling temperature; contact time: 30 minutes), while making sure that the pH value of said extract be lower than 10, preferably from 8.5 to 9.2. The check may be completed by determining also the content of the carbonates-bicarbonates and silicates in solution.

It is apparent that the process of the present invention can be practised also in a "synthetic" way by preparing the bath starting from commercial technically pure carbonates, carbon dioxide and silicates, and by dosing them at the beginning and during the process in such manner, as to maintain, at the selected operating temperature (from 85 to 120°C), the above-specified concentration and pH conditions.

The abovesaid "synthetic" way, however, is less advantageous than the one previously described as preferred embodiment, which utilizes, as raw material, for preparing the bath, foamed clay.

Hereinafter there are given two examples of embodiments of the present invention, which are merely intended to illustrate and facilitate the comprehension thereof without limiting it.

Example 1

375 grams of foamed clay balls with a diameter ranging from 3 to 9 mm (type "Ares 4 sciolto"—"Dissolved Ares 4" produced by Ditta Cementi Buzzi, Casale Monferrato, Italy), previously dried in oven with hot air circulation at about 150°C, were placed into a vessel containing 1 liter of water: into the resulting bath—previously heated to boiling—there was immersed a 99.5% aluminium plate measuring 50×50×2 mm, previously hot degreased with trichloroethylene and pickled with a 1M NaOH solution and finally washed in running water and neutralized with 1M

$HNO_3$. After a 120-minute treatment in said bath, always kept at the boiling temperature, said plate was taken out from the bath: the plate so treated resulted to be coated with a brown-black coating, of 130 nm thickness (nm=nanometers), which indicated an absorptance value, in the wavelength range of 360—1900 nm, equal to 0.90, and an emissivity value in the area of wavelengths higher than 6000 nm equal to 0.15.

A solution sample drawn from the bath 30 minutes after the Al plate immersion, yielded the following data on chemical analysis:

— pH=8.5
— silicates (expressed as $Na_2SiO_3 \cdot 9H_2O$): 120 mg/l
— carbonates+bicarbonates (expressed as $HCO_3^- + CO_3^=$): 125 mg/l
— $[HCO_3^-]/[CO_3^=]$=65.

The abovesaid foamed clay balls—subjected to chemical analysis prior to use—revealed the presence of the following compounds: $SiO_2$: 65.4%; $Al_2O_3$: 16.38%; $Fe_2O_3$: 7.35%; MgO: 2.68%; CaO: 3.70%; $K_2O$: 1.55%; $Na_2O$: 1.70%; $SO_3$: 0.1%; $TiO_2$: 0.5%; further not determined compounds: 0.64%.

The analysis of the black coating—carried out according to a chemical-physical method—gave the following results: Al=6.3%; Si=5.1%; Ca=1.6%; O=24.3%; C=62.7%.

The thickness of said black coating was of 250 nm (nanometers).

Example 2

It was operated in the same manner as in Example 1, with the only exception that instead of the 99.5% Al plate there was immersed into the bath and treated a plate of equal size and consisting of an Al-Mg-Si alloy Series 6000.

The results obtained were substantially identical with those of Example 1.

From what is described and exemplified thereinbefore it is apparent the technical progress of the present invention, chiefly in connection with the following facts:

— the process results extraordinarily simple and very easy to be controlled: in fact, the bath is correctly and automatically chemically self-controlled during the entire duration of the black coating production process, without the need of chemical-physical analyses or measures and/or additions of reagents in the course of the process itself;
— the raw material (foamed clay) is easily and economically available. Furthermore, the foamed clay—after the use for the purposes of the invention—can be utilized again as insulating material;
— the black coating formed on the surface of the semifinished product of aluminium or its alloys is endowed with characteristics of high selectivity, according with the objects of the invention.

The present invention is particularly useful to produce black selective coatings on surfaces of aluminium bodies or of aluminium alloy bodies, preferably primary aluminium Series 1000 and Al-Mg-Si alloys 6000, as is proved by the Examples described hereinabove.

## Claims

1. A process for producing on surfaces of bodies of aluminium and alloys thereof containing at least 85% by weight of Al, to be utilized particularly as solar radiant energy absorbing surfaces, a black selective coating endowed with an absorptance higher than 80% towards the radiations between 0.38 and 1.9 µm in the regions of the visible and of the near infrared of the solar spectrum, and with an emissivity lower than 50% towards the radiations higher than 6 µm in the region of the far infrared of said spectrum, said process being one which provides immersion of the previously degreased and/or pickled bodies, in a hot alkaline aqueous solution comprising silicates, characterized in that said immersion takes place for a time not lower than 10 minutes into a bath, maintained at a temperature in the range from 85 to 120°C, said bath consisting substantially of water and a plurality of stiff porous bodies essentially consisting of clays, previous prepared by admixing with water and foaming by means of baking at a temperature higher than 1000°C, rich in salts of alkaline and alkaline-earth metals, such that there is imparted to said bath, under, the abovesaid operative conditions, a substantially buffered pH from 7 to 10, a total content of carbonates+bicarbonates ranging from 10 to 250 mg/l with a bicarbonates/carbonates $[HCO_3^-]/[CO_3^-]$ ratio ranging from 200 to 13, and a silicates content from 10 to 200 mg/l.

2. The process according to claim 1, characterized in that the bath temperature is the boiling temperature and the immersion time is of 80—100 minutes.

3. The process according to claim 1, characterized in that said foamed conglomerate clay bodies have a spheroidal shape with diameters of 5—10 mm.

4. Bodies of aluminium or of its alloys coated with a black selective coating obtained by a process according to claim 1.

5. Bodies according to claim 4, which are in form of shaped plates consisting of primary aluminium Series 1000.

6. Bodies according to claim 4, which are in form of shaped plates consisting of Al-Mg-Si alloy Series 6000.

7. A process for producing on surfaces of bodies of aluminium and alloys thereof containing at least 85% by weight of Al, to be utilized particularly as solar radiant energy absorbing surfaces, a black selective coating endowed with an absorptance higher than 80% towards the radiations between 0.38 and 1.9 µm in the regions of the visible and of the near infrared of the solar spectrum, and of an emissivity lower than 50% towards the radiations higher than 6 µm in the region of the far infrared of said spectrum, said process being one which provides immersion of the previously degreased and/or pickled bodies in a hot alkaline aqueous solution comprising silicates, characterized in that said immersion takes place for a time not lower than 10 minutes into a bath that consists of water containing silicates at a concentration from 10 to 200 mg/l, and carbonates and bicarbonates of alkaline and alkaline-earth metals at a total concentration ranging from 10 to 250 mg/l, with a $[HCO_3^-]/[CO_3^-]$ ratio ranging from 200 to 13, said bath being maintained at a temperature ranging from 85° to 120°C and at a pH ranging from 7 to 10.

## Patentansprüche

1. Verfahren zum Herstellen einer Schwarzen selektiven Beschichtung auf Oberflächen von Körpern aus Aluminium und dessen Legierungen, die mindestens 85 Gew.-% Aluminium enthalten, zur Verwendung insbesondere als Solarstrahlungsenergie absorbierende Oberflächen, wobei die schwarze selektive Beschichtung ein Absorptionsvermögen von über 80% gegenüber den Strahlungen zwischen 0,38 und 1,9 µm in den Bereichen des sichtbaren und des nahen infraroten Lichtes des Solarspektrums sowie ein Emissionsvermögen von weniger als 50% bezüglich der Strahlungen von über 6 µm im Bereich des fernen infraroten Lichts des genannten Spektrums aufweist, wobei in dem genannten Verfahren die vorher entfetteten und/oder gepickelten Körper in eine heiße alkalische wäßrige Lösung, die Silicate enthält, eingetaucht werden, dadurch gekennzeichnet, daß das genannte Eintauchen während einer Zeit von nicht weniger als 10 min geschieht und dabei ein Bad eingesetzt wird, das bei einer Temperatur im Bereich von 85 bis 120°C gehalten wird und im wesentlichen aus Wasser und einer Mehrzahl an steifen porösen Körpern besteht, die im wesentlichen aus Tonen zusammengesetzt sind und vorher durch Mischen mit Wasser sowie Schäumen durch Brennen bei einer Temperatur von über 1000°C hergestellt und reich an Alkali- und Erdalkalimetallsalzen sind, derart, daß dem genannten Bad unter den obengenannten Arbeitsbedingungen ein im wesentlichen gepufferter pH-Wert von 7 bis 10, ein Gesamtgehalt an Carbonaten und Bicarbonaten im Bereich von 10 bis 250 mg/l mit einem Bicarbonat-Carbonat-Verhältnis $[HCO_3^-]/[CO_3^{2-}]$ im Bereich von 200 bis 13, sowie ein Silicatgehalt von 10 bis 200 mg/l verliehen wird.

2. Verfahren nach Anspruch 1, dadurch gekennzeichnet, daß die Badtemperatur die Siedetemperatur ist und die Eintauchzeit 80 bis 100 min beträgt.

3. Verfahren nach Anspruch 1, dadurch gekennzeichnet, daß die geschäumten Konglomerattonkörper eine kugelige Gestalt mit einem Durchmesser von 5 bis 10 mm aufweisen.

4. Aus Aluminium oder seinen Legierungen bestehende Körper, die mit einer schwarzen selektiven Beschichtung, welche durch ein Verfahren gemäß Anspruch 1 erhalten wurde, beschichtet sind.

5. Körper nach Anspruch 4, die als geformte Platten vorliegen, welche aus Primäraluminium der Reihen 1000 bestehen.

6. Körper nach Anspruch 4, die als geformte Platten vorliegen, welche aus einer Al-Mg-Si-Legierung der Reihen 6000 bestehen.

7. Verfahren zum Herstellen einer schwarzen selektiven Beschichtung auf Oberflächen von Körpern aus Aluminium und seinen Legierungen, die mindestens 85 Gew.-% Aluminium enthalten, zur Verwendung insbesondere als Solarstrahlungsenergie absorbierende Oberflächen, wobei die schwarze selektive Beschichtung ein Absorptionsvermögen von über 80% gegenüber den Strahlungen zwischen 0,38 und 1,9 µm in dem Bereich des sichtbaren und des nahen infraroten Lichts des Sonnenspektrums sowie ein Emissionsvermögen von unter 50% bezüglich der Strahlungen über 6 µm im Bereich des fernen infraroten Lichts des genannten Spektrums aufweist, wobei das genannte Verfahren ein solches ist, bei dem die vorher entfetteten und/oder gepickelten Körper in eine heiße alkalische wäßrige Lösung, die Silicate enthält, eingetaucht werden, dadurch gekennzeichnet, daß das genannte Eintauchen während einer Zeit von nicht weniger als 10 min in ein Bad erfolgt, das aus Wasser besteht, welches Silicate in einer Konzentration von 10 bis 200 mg/l sowie Carbonate und Bicarbonate von Alkali- und Erdalkalimetallen in einer Gesamtkonzentration im Bereich von 10 bis 250 mg/l mit einem Verhältnis $[HCO_3^-]/[CO_3^{2-}]$ im Bereich von 200 bis 13 enthält, wobei das genannte Bad bei einer Temperatur im Bereich von 85 bis 120°C und einem pH-Wert im Bereich von 7 bis 10 gehalten wird.

## Revendications

1. Procédé de réalisation sur des surfaces de masses ou corps en aluminium et de ses alliages contenant au moins 85% en poids d'Al, à utiliser notamment comme surfaces d'absorption d'énergie de rayonnement solaire, d'un revêtement noir sélectif doté d'une absorbance supérieure à 80% vis-à-vis des radiations comprises entre 0,38 et 1,9 µm dans les régions de l'infrarouge visible et de l'infrarouge proche du spectre solaire, et d'une émissivité inférieure à 50% vis-à-vis des radiations supérieures à 6 µm dans la région de l'infrarouge lointain de ce spectre, ce procédé faisant partie de ceux qui prévoient l'immersion des masses ou corps préalablement dégraissés et/ou décapés dans une solution aqueuse alcaline chaude renfermant des silicates, caractérisé en ce que cette immersion a lieu pendant un temps qui n'est pas inférieur à 10 minutes dans un bain maintenu à une température comprise entre 85 et 120°C, ce bain étant constitué essentiellement d'eau et d'une pluralité de corps ou masses poreux rigides constitués essentiellement d'argiles préalablement préparées par mélange avec de l'eau et expansion au moyen d'une cuisson à une température supérieure à 1 000°C, riches en sels de métaux alcalins et alcalino-terreux, de telle sorte qu'elles confèrent à ce bain, dans les conditions opératoires mentionnées ci-dessus, un pH sensiblement tamponné de 7 à 10, une teneur totale en carbonates+bicarbonates comprise entre 10 et 50 mg/l, le rapport bicarbonates/carbonates $(HCO_3^-)/(CO_3^{--})$ compris entre 200 et 13 et une teneur en silicates de 10 à 200 mg/l.

2. Procédé selon la revendication 1, caractérisé en ce que la température du bain est la température d'ébullition et le temps d'immersion est de 80 à 100 minutes.

3. Procédé selon la revendication 1, caractérisé en ce que ces corps ou masses d'argiles agglomérées expansées ont une forme sphéroïdale et des diamètres de 5 à 10 mm.

4. Masses d'aluminium ou de ses alliages revêtues d'un revêtement sélectif noir obtenu par un procédé selon la revendication 1.

5. Masse selon la revendication 4, se trouvant sous la forme de plaques conformées constituées d'aluminium primaire de Séries 1000.

6. Masses selon la revendication 4, se trouvant sous la forme de plaques conformées constituées d'alliage Al-Mg-Si de Séries 6000.

7. Procédé de préparation à la surface de corps d'aluminium et de ses alliages contenant au moins 85% en poids d'Al, à utiliser notamment comme surfaces d'absorption de l'énergie de radiation solaire d'un revêtement sélectif noir doté d'une absorbance supérieure à 80% vis-à-vis des radiations comprises entre 0,38 et 1,9 µm dans les régions de l'infrarouge visible et de l'infrarouge proche du spectre solaire, et d'une émissivité inférieure à 50% vis-à-vis des radiations supérieures à 6 µm dans la région de l'infrarouge lointain de ce spectre, ce procédé étant l'un des procédés qui prévoit une immersion des corps ou masses préalablement dégraissés et/ou décapés dans une solution aqueuse alcaline chaude comprenant des silicates, caractérisé en ce que cette immersion a lieu pendant un temps qui n'est pas inférieur à 10 minutes dans un bain constitué d'eau contenant des silicates à une concentration de 10 à 200 mg/l, et des carbonates et des bicarbonates de métaux alcalins et alcalino-terreux à une concentration totale comprise entre 10 et 250 mg/l, le rapport $(HCO_3^-)/(CO_3^{--})$ étant compris entre 200 et 13, ce bain étant maintenu à une température comprise entre 85 et 120°C et le pH étant compris entre 7 et 10.